# EUROPÄISCHE PATENTSCHRIFT

(11) **EP 2 383 448 B1**
(45) Veröffentlichungstag und Bekanntmachung des Hinweises auf die Patenterteilung: **03.03.2021**
(21) Anmeldenummer: 11158624.4
(22) Anmeldetag: 17.03.2011
(51) Int. Cl.: F02B 27/00, F02B 27/04, F02B 29/06, F02M 35/12

(54) **KOLBENMOTOR, VERFAHREN UND VERWENDUNG**
PISTON ENGINE, METHOD AND USE
MOTEUR À PISTON, PROCÉDÉ ET UTILISATION

(30) Priorität: 28.04.2010 DE 102010018659
(43) Veröffentlichungstag der Anmeldung: 02.11.2011
(73) Patentinhaber: Eberspächer Exhaust Technology GmbH & Co. KG, 66539 Neunkirchen (DE)
(72) Erfinder: Krüger, Jan, 73730 Esslingen (DE); Jebasinski, Rolf, 70794, Filderstadt (DE)
(74) Vertreter: BRP Renaud & Partner mbB Rechtsanwälte Patentanwälte Steuerberater

(56) Entgegenhaltungen:
- CA-A1- 2 220 858
- DE-A1- 3 729 998
- DE-A1- 4 012 558
- DE-A1- 10 036 020
- DE-A1- 10 128 721
- DE-U1- 20 207 300
- GB-A- 2 203 488
- JP-A- S6 176 721
- JP-A- S63 111 230
- US-A- 3 254 484
- US-A- 6 065 454
- US-B1- 6 202 409

## Beschreibung

Die vorliegende Erfindung betrifft ein Verfahren zum Betreiben eines Kolbenmotors, insbesondere eines Kraftfahrzeugs. Die Erfindung betrifft außerdem einen Kolbenmotor, insbesondere eines Kraftfahrzeugs. Außerdem betrifft die vorliegende Erfindung eine Verwendung eines elektroakustischen Wandlers.

Ein Kolbenmotor weist mehrere Zylinder auf, in denen Kolben hubverstellbar angeordnet sind und in denen Brennräume ausgebildet sind. Eine Frischluftanlage dient zum Zuführen von Frischluft zu den Zylindern. Eine Abgasanlage dient zum Abführen von Abgas von den Zylindern. Während eines Ladungswechsels wird nach einem Verbrennungsvorgang gebildetes Abgas aus dem Zylinder abgeführt und für den nächsten Verbrennungsvorgang Frischluft zugeführt. Zur Steuerung des Ladungswechsels sind üblicherweise Ladungswechselventile, nämlich Einlassventile und Auslassventile vorgesehen.

Zur Leistungssteigerung und Wirkungsgradverbesserung sowie zur Emissionsreduzierung ist es bekannt, für den Ladungswechsel dynamische Strömungseffekte auszunutzen, die in der Frischluftanlage entstehen. Durch die Ladungswechselvorgänge kommt es in der Frischluftanlage zu Schwingungen. Durch Resonanz- oder Schwingrohre lassen sich Resonanzeffekte ausnutzen, um die Beladung der Zylinder mit Frischluft zu verbessern. Um eine derartige Ladungsverbesserung auch bei unterschiedlichen Drehzahlen des Kolbenmotors erzielen zu können, sind verstellbare Schwingrohre allgemein bekannt, mit denen für niedrige Drehzahlen des Kolbenmotors eine vergleichsweise große Schwingrohrlänge einstellbar ist, während für höhere Drehzahlen des Kolbenmotors eine vergleichsweise kurze Schwingrohrlänge einstellbar ist.

Darüber hinaus sind unterschiedliche Ladeeinrichtungen bekannt, wie z. B. Kompressoren und Turbolader, mit denen das Druckniveau in der den Zylindern zugeführten Frischluft erhöht werden kann. Auch hierdurch lässt sich die Aufladung der Zylinder verbessern.

In der Abgasanlage erfolgt zum einen eine Reinigung der Abgase, um Emissionswerte des Kolbenmotors zu reduzieren. Zum anderen erfolgt in der Abgasanlage auch eine Bedämpfung des vom Kolbenmotor erzeugten und im Abgas mitgeführten Schalls, um eine Schallemission des Kolbenmotors zu reduzieren. Bei modernen Abgasanlagen können auch aktive Schalldämpfer zum Einsatz kommen, die auf dem Prinzip der Antischallerzeugung beruhen. Ein derartiger aktiver Schalldämpfer enthält zumindest einen elektroakustischen Wandler, bei dem es sich in der Regel um einen Lautsprecher handeln kann, mit dessen Hilfe aktiv Gegenschall erzeugt wird, der gegenüber dem zu bedämpfenden Schall phasenverschoben ist, derart, dass sich bei der Überlagerung von Schall und Gegenschall eine möglichst weitgehende gegenseitige Auslöschung ergibt. Derartige aktive Schalldämpfer können auch bei einer Frischluftanlage zum Einsatz kommen, um frischluftseitig emittierten Schall des Kolbenmotors zu bedämpfen

Aus der DE 101 28 721 A1 ist eine Vorrichtung zur Aufladung einer Brennkraftmaschine mittels einer Lautsprechervorrichtung mit einem Mikrofon bekannt, die auch für eine aktive Geräuschunterdrückung vorgesehen ist.

Die vorliegende Erfindung beschäftigt sich mit dem Problem, für einen Kolbenmotor bzw. für ein zugehöriges Betriebsverfahren eine verbesserte Ausführungsform anzugeben, die sich insbesondere durch einen verbesserten Ladungswechsel auszeichnet.

Dieses Problem wird erfindungsgemäß durch die Gegenstände der unabhängigen Ansprüche 1 und 8 gelöst. Vorteilhafte Ausführungsformen sind Gegenstand der abhängigen Ansprüche.

Die Erfindung beruht auf dem allgemeinen Gedanken, die Beladung des jeweiligen Zylinders mit Frischluft mit Hilfe einer frischluftseitigen Überdruckwelle zu verbessern bzw. die Entladung des jeweiligen Zylinders von Abgas mit Hilfe einer abgasseitigen Unterdruckwelle zu verbessern. Erfindungsgemäß wird dabei die jeweilige Druckwelle mittels eines einzigen elektroakustischen Wandlers erzeugt, der hierzu an die Frischluftanlage und an die Abgasanlage angeschlossen ist oder darin integriert ist.

Eine frischluftseitige Überdruckwelle, die sich in der Frischluftanlage in Richtung Zylinder ausbreitet und die auf den Ladungswechsel gezielt so abgestimmt ist, dass sie bei schließendem Einlassventil zwar noch in den Zylinder einlaufen kann, danach jedoch nicht mehr aus dem Zylinder entweichen kann, führt im jeweiligen Zylinder zu einer Druckerhöhung und somit zu einer verbesserten Beladung des jeweiligen Zylinders. Eine abgasseitige Unterdruckwelle, die sich in der Abgasanlage in Richtung Zylinder ausbreitet und die während eines Schließvorgangs eines Auslassventils zwar noch in den jeweiligen Zylinder eintreten kann, jedoch danach nicht mehr daraus entweichen kann, führt zu einer signifikanten Druckabsenkung im Zylinder, was für die nachfolgende Befüllung mit Frischluft von Vorteil ist. Die Erfindung nutzt nun die Erkenntnis, dass mit Hilfe von elektroakustischen Wandlern, die für die Bedämpfung von störendem Schall mittels Antischall an sich bekannt sind, gezielt derartige Druckwellen, also Überdruckwellen in der Frischluftanlage und Unterdruckwellen in der Abgasanlage, erzeugt werden können, um den Ladungswechsel der einzelnen Zylinder zu verbessern. Von besonderem Vorteil ist dabei, dass derartige elektroakustische Wandler vergleichsweise kompakt realisierbar sind und bezüglich der erzeugbaren Druckwellen in hohem Maße variabel sind. Somit können die mit Hilfe des elektroakustischen Wandlers erzeugten Druckwellen besonders günstig an die Bedürfnisse der Ladungswechselvorgänge auch bei variierenden Betriebszuständen des Kolbenmotors angepasst werden. Bspw. lassen sich die Amplituden der erzeugten Druckwellen variieren. Ebenso kann die Frequenz variiert werden, mit welcher die Druckwellen erzeugt werden. Somit ist insbesondere eine einfache Adaption an variierende Drehzahlen des Kolbenmotors möglich. Im Vergleich zu verstellbaren Schwingrohren, die lediglich eine Einstellung von zwei verschiedenen Schwingrohrlängen und somit lediglich eine Optimierung für zwei verschiedene Drehzahlen zulassen, ergibt sich mit Hilfe des elektroakustischen Wandlers eine erhebliche Verbesserung, da quasi für jede Drehzahl der Brennkraftmaschine geeignete Druckwellen generiert werden können.

Entsprechend einer vorteilhaften Ausführungsform lassen sich in Relation zu den Zündzeitpunkten die Zeitpunkte zum Erzeugen der Druckwellen in Abhängigkeit einer Drehzahl des Kolbenmotors ermitteln. Somit kann für jede Drehzahl des Kolbenmotors der elektroakustische Wandler so betrieben werden, dass die damit erzeugten Druckwellen an jedem einzelnen Zylinder rechtzeitig ankommen, um als frischluftseitige Überdruckwelle unmittelbar vor dem Schließen des jeweiligen Einlassventils in den jeweiligen Zylinder einzutreten oder um als abgasseitige Unterdruckwelle unmittelbar vor dem Schließen des jeweiligen Auslassventils in den jeweiligen Zylinder einzutreten.

Bei einer anderen vorteilhaften Ausführungsform kann vorgesehen sein, in Relation zu den Zündzeitpunkten den Zeitpunkt zum Erzeugen der Druckwellen in Abhängigkeit einer Drehzahl des Kolbenmotors und in Abhängigkeit der Temperatur der Frischluft und/oder des Abgases zu ermitteln. Durch die zusätzliche Berücksichtigung der Temperatur kann außerdem die sich mit der Temperatur ändernde Schallausbreitungsgeschwindigkeit berücksichtigt werden. Folglich kann die Laufzeit besser berücksichtigt werden, welche die jeweilige Druckwelle für die Strecke vom elektroakustischen Wandler bis zum jeweiligen Zylinder benötigt.

Besonders zweckmäßig ist dabei eine Ausführungsform, bei welcher in Relation zu den Zündzeitpunkten die Zeitpunkte zum Erzeugen der Druckwelle in Verbindung mit einem Kennfeld ermittelt werden, in dem in Relation zu den Zündzeitpunkten die Zeitpunkte zum Erzeugen der Druckwelle abhängig von der Drehzahl in Kennlinien abgelegt sind, die verschiedenen Temperaturen oder Temperaturbereichen des Abgases bzw. der Frischluft zugeordnet sind. Kennfeldbasierte Steuerungssysteme arbeiten mit hoher Zuverlässigkeit und benötigen vergleichsweise wenig Rechnerleistung.

Bei einer anderen Ausführungsform können die Amplituden der Druckwellen in Abhängigkeit der aktuellen Motorleistung ermittelt werden. Bspw. kann es sinnvoll sein, bei Volllast große oder maximale Amplituden zu erzeugen, während bei Teillast geringere Amplituden erzeugt werden und insbesondere beim Leerlaufbetrieb keine oder minimale Amplituden erzeugt werden. Zur Kopplung der Druckwellenamplituden mit der Motorleistung kann es bspw. vorgesehen sein, ein mit der aktuellen Motorleistung korreliertes Signal von einem Motorsteuergerät zu berücksichtigen. Diese Ausführungsform beruht auf der Idee, dass in einem Motorsteuergerät ohnehin die benötigten Informationen über die Motorleistung vorhanden sind, sodass die Bereitstellung bzw. ein Abgreifen eines mit der Motorleistung korrelierten Signals am Motorsteuergerät besonders einfach realisierbar ist.

Erfindungsgemäß werden die Amplituden der Druckwellen mittels einer Regelung eingestellt, die als Regelgrößen Messsignale eines Mikrofons berücksichtigt. Entsprechend einer Ausführungsform können die Amplituden der Druckwellen mittels einer Regelung eingestellt werden, die als Regelgrößen Signale eines Motorsteuergeräts berücksichtigt. In diesem Fall wird ein Regelkreis aufgebaut, der selbsttätig die Druckwellenamplituden an den aktuellen Bedarf anpasst.

Erfindungsgemäß ist nun vorgesehen, den elektroakustischen Wandler außerdem zum Erzeugen der Druckwellen zumindest in bestimmten Drehzahlbereichen und/oder Lastbereichen zum Erzeugen von Antischall zu verwenden, um Störgeräusche, die sich in der Frischluftanlage und/oder in der Abgasanlage ausbreiten, zu bedämpfen. Durch diese Maßnahme erhält der jeweilige elektroakustische Wandler eine Zusatzfunktion. Zum einen wird er erfindungsgemäß zum Erzeugen von Druckwellen verwendet, mit denen die Ladungswechselvorgänge unterstützt werden. Zum anderen wird er konventionell verwendet, um die Schallemission des Kolbenmotors zu reduzieren.

Die Erfindung betrifft somit auch eine neuartige Verwendung eines elektroakustischen Wandlers, nämlich zum Erzeugen von Überdruckwellen in einer Frischluftanlage eines Kolbenmotors, die während eines Ladungswechsels eine Beladung von Zylindern des Kolbenmotors mit Frischluft unterstützen, und/oder zum Erzeugen von Unterdruckwellen in einer Abgasanlage eines Kolbenmotors, die während eines Ladungswechsels eine Entladung von Zylindern des Kolbenmotors von Abgas unterstützen. Dabei kann ein derartiger elektroakustischer Wandler exklusiv für diese Aufgabe in der Frischluftanlage bzw. in der Abgasanlage vorgesehen sein. Ebenso ist es möglich, einen in der Frischluftanlage bzw. in der Abgasanlage ohnehin zur Schalldämpfung mittels Antischall vorgesehenen elektroakustischen Wandler zusätzlich zur Unterstützung der Ladungswechselvorgänge zu betreiben.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

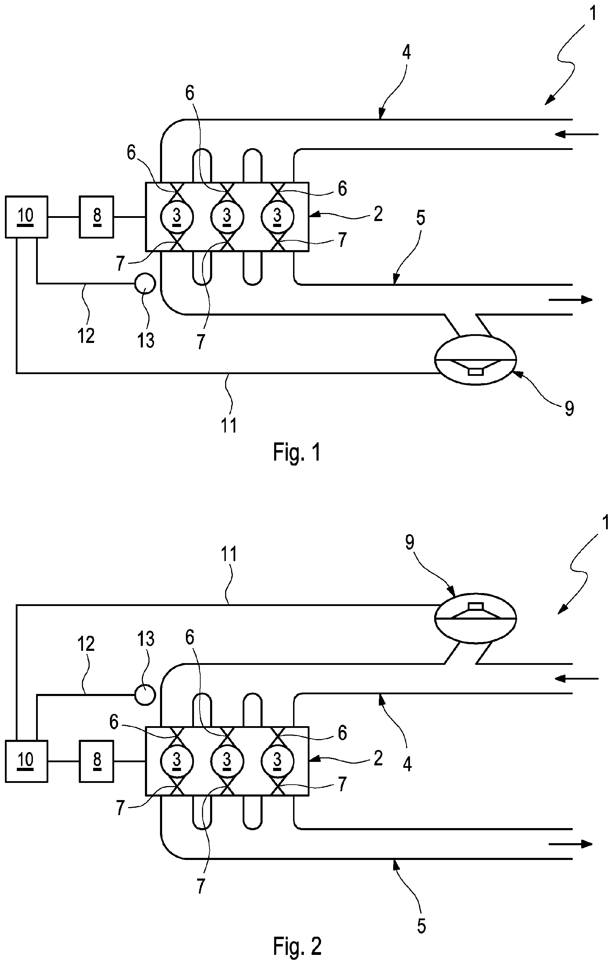

Fig. 1 bis 3 jeweils eine stark vereinfachte Prinzipdarstellung eines Kolbenmotors bei verschiedenen, jedoch nicht erfindungsgemäßen Ausführungsformen.

Entsprechend den Figuren 1 bis 3 umfasst ein Kolbenmotor 1 in einem Motorblock 2 mehrere Zylinder 3, eine Frischluftanlage 4 und eine Abgasanlage 5. Üblicherweise ist ein derartiger Kolbenmotor 1 in einem Kraftfahrzeug angeordnet. Grundsätzlich sind jedoch auch stationäre Anwendungen denkbar.

Die Frischluftanlage 4 dient zum Zuführen von Frischluft zu den Zylindern 3. Die Abgasanlage 5 dient zum Abführen von Abgas von den Zylindern 3. Zum Steuern der Ladungswechselvorgänge sind den Zylindern 3 Ladungswechselventile zugeordnet, nämlich jeweils zumindest ein Einlassventil 6 und zumindest ein Auslassventil 7. Es ist klar, dass auch zwei oder mehr Einlassventile 6 bzw. Auslassventile 7 je Zylinder 3 vorgesehen sein können. Zum Betreiben des Kolbenmotors 1 ist üblicherweise auch ein Motorsteuergerät 8 vorgesehen, das auf geeignete Weise mit den zu steuernden Komponenten des Kolbenmotors 1 gekoppelt ist.

Der hier vorgestellte Kolbenmotor 1 weist außerdem zumindest einen elektroakustischen Wandler 9 auf, der mit der Frischluftanlage 4 bzw. mit der Abgasanlage 5 gekoppelt ist. Bei der in Fig. 1 gezeigten Ausführungsform ist ein einziger solcher elektroakustischer Wandler 9 vorgesehen, der an die Abgasanlage 5 angeschlossen ist. Bei der in Fig. 2 gezeigten Ausführungsform ist ein einziger elektroakustischer Wandler 9 vorgesehen, der an die Frischluftanlage 4 angeschlossen ist. Bei der in Fig. 3 gezeigten Ausführungsform sind genau zwei elektroakustische Wandler 9 vorgesehen, von denen der eine an die Frischluftanlage 4 angeschlossen ist, während der andere an die Abgasanlage 5 angeschlossen ist. Erfindungsgemäß ist jedoch ein einziger elektroakustischer Wandler 9 sowohl an die Frischluftanlage 4 als auch an die Abgasanlage 5 angeschlossen .

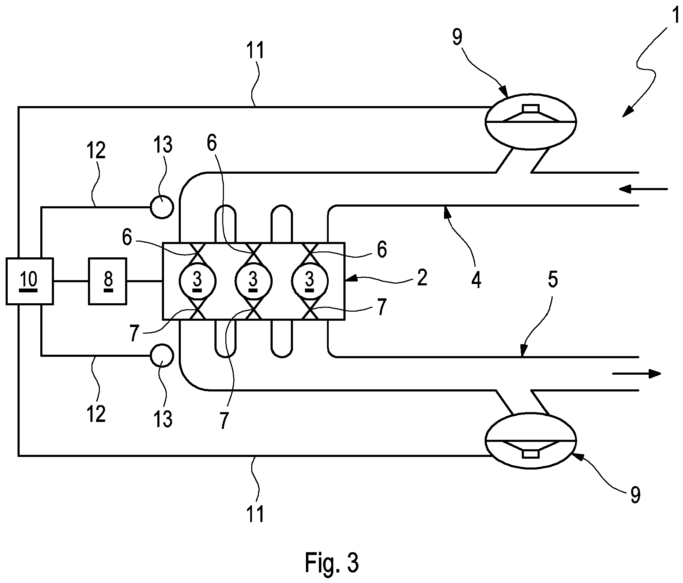

Zum Betätigen des jeweiligen elektroakustischen Wandlers 9 ist eine Steuereinrichtung 10 vorgesehen, die über wenigstens eine Steuerleitung 11 mit dem jeweiligen Wandler 9 verbunden ist. Darüber hinaus kann optional vorgesehen sein, dass die Steuereinrichtung 10 über eine entsprechende Signalleitung 12 mit zumindest einem Mikrofon 13 gekoppelt ist. Das Mikrofon 13 kann bei einem abgasseitig angeordneten Wandler 9 im Bereich der Abgasanlage 5 angeordnet sein, was in Fig. 1 wiedergegeben ist. Bei einem frischluftseitigen Wandler 9 kann das Mikrofon 9 im Bereich der Frischluftanlage 4 angeordnet sein, was in Fig. 2 dargestellt ist. Fig. 3 zeigt eine Ausführungsform mit zwei Mikrofonen 13, von denen das eine an der Frischluftanlage 4 angeordnet ist, während das andere an der Abgasanlage 5 angeordnet ist. Mit Hilfe des jeweiligen Mikrofons 13 kann die Steuereinrichtung 10 einen Regelkreis aufbauen, mit dessen Hilfe die Betätigung des jeweiligen Wandlers 9 geregelt erfolgen kann. In den Fig. 1 bis 3 sind je Mikrofon 13 zwei alternative Positionierungsmöglichkeiten angedeutet, nämlich jeweils eine motornahe Positionierung, in der Frischluft stromab bzw. im Abgas stromauf des jeweiligen Wandlers 9, sowie eine motorferne Positionierung, in der Frischluft stromauf bzw. im Abgas stromab des jeweiligen Wandlers 9.

Der hier vorgestellte Kolbenmotor 1 lässt sich wie folgt betreiben:
Während des Betriebs des Kolbenmotors 1 finden laufend Ladungswechsel statt, bei denen im jeweiligen Zylinder 3 nach einem Verbrennungsvorgang Abgas aus dem Zylinder 3 abgeführt wird und anschließend für den nächsten Verbrennungsvorgang Frischluft dem jeweiligen Zylinder 3 zugeführt wird. Hierzu werden die Ladungswechselventile 6,7 entsprechend betätigt. Zur Verbesserung dieser Ladungswechselvorgänge kann die Steuereinrichtung 10 den jeweiligen elektroakustischen Wandler 9 zur Erzeugung von Druckwellen ansteuern.

Die Steuereinrichtung 10 kann den gemäß den Figuren 1 und 3 der Abgasanlage 5 zugeordneten Wandler 9 gezielt zum Erzeugen von Unterdruckwellen ansteuern, die auf die Ladungswechselvorgänge so abgestimmt sind, dass am jeweiligen Zylinder 3 eine Unterdruckwelle noch in den jeweiligen Zylinder 3 eintreten kann, bevor das zugehörige Auslassventil 7 vollständig schließt. Hierdurch wird der mit Hilfe der Unterdruckwelle der in den jeweiligen Zylinder 3 eingebrachte Unterdruck im Zylinder 3 gefangen, was die nachfolgende Beladung mit Frischluft erheblich verbessert. Die Frischluft wird beim Öffnen des zugehörigen Einlassventils 6 quasi in den jeweiligen Zylinder 3 angesaugt.

Sofern der jeweilige elektroakustische Wandler 9 wie in den Figuren 2 und 3 der Frischluftanlage 4 zugeordnet ist, kann die Steuereinrichtung 10 den jeweiligen Wandler 9 zum Erzeugen einer Überdruckwelle ansteuern. Die Erzeugung derartiger Überdruckwellen ist dabei wieder auf die Ladungswechselvorgänge gezielt so abgestimmt, dass eine Überdruckwelle in den jeweiligen Zylinder 3 eintreten kann, unmittelbar bevor das jeweilige Einlassventil 6 schließt. Hierdurch wird diese Überdruckwelle im jeweiligen Zylinder 3 gefangen, wodurch sich dort die Beladung des Zylinders 3 verbessert.

Um die Druckwellen gezielt so erzeugen zu können, dass sie im jeweiligen Zylinder 3 eingeschlossen werden können, ist der Zeitpunkt, zu welchem die jeweilige Druckwelle vom jeweiligen Wandler 9 erzeugt wird, von entscheidender Bedeutung. Die Steuereinrichtung 10 kann nun in Abhängigkeit einer Drehzahl des Kolbenmotors 1 die Zeitpunkte zum Erzeugen der Druckwellen ermitteln. Die Drehzahl des Kolbenmotors 1 kennt die Steuereinrichtung 10 bspw. von dem Motorsteuergerät 8, mit dem die Steuereinrichtung 10 auf geeignete Weise gekoppelt ist. Zweckmäßig berücksichtigt die Steuereinrichtung 10 bei der Ermittlung der Zeitpunkte für die Erzeugung der Druckwellen außerdem die aktuelle Temperatur der Frischluft bzw. des Abgases. Entsprechende Temperatursensoren sind hier nicht dargestellt. Insbesondere können derartige Temperaturwerte auch am Motorsteuergerät 8 abgerufen werden, sofern für andere Zwecke derartige Temperatursensoren ohnehin vorhanden sind. Durch die Berücksichtigung der aktuellen Temperatur kann die Abhängigkeit der Schallausbreitungsgeschwindigkeit von der Temperatur im jeweiligen Gas, Frischluft oder Abgas, berücksichtigt und dementsprechend kompensiert werden.

Besonders zweckmäßig ist dabei eine Ausführungsform, bei welcher die Steuereinrichtung 10 auf ein Kennfeld zugreift, in dem mehrere Kennlinien abgelegt sind, die unterschiedlichen Temperaturen oder unterschiedlichen Temperaturbereichen zugeordnet sind und in denen jeweils der Zusammenhang zwischen dem Zeitpunkt zum Erzeugen der Druckwelle und der Drehzahl des Kolbenmotors 1 abgelegt ist.

Zusätzlich zu den Zeitpunkten, zu denen die Druckwellen vom jeweiligen Wandler 9 erzeugt werden, kann die Steuereinrichtung 10 außerdem die Amplituden der Druckwellen variieren. Zweckmäßig kann dabei eine Adaption der Amplituden der Druckwellen abhängig von der aktuellen Motorleistung realisiert werden. Hierzu ermittelt die Steuereinrichtung 10, insbesondere in Verbindung mit dem Motorsteuergerät 8, die aktuelle Motorleistung und steuert abhängig davon den jeweiligen Wandler 9 zum Erzeugen von Druckwellen mit den entsprechend an die Motorleistung adaptierten Amplituden an.

Alternativ ist es ebenso möglich, die Amplituden der Druckwellen mittels einer Regelung einzustellen. Die Steuereinrichtung 10 kann dabei als Regelgröße die Messsignale des jeweiligen Mikrofons 13 berücksichtigen. Alternativ oder zusätzlich kann die Steuereinrichtung 10 als Regelgröße auch Signale des Motorsteuergeräts 8 berücksichtigen. Bspw. kann eine Kombination der Mikrofonsignale mit der aktuellen Motorleistung verwendet werden, um die Druckwellenamplituden zu regeln.

Entsprechend einer besonders vorteilhaften Ausführungsform ist es zumindest in bestimmten Drehzahlbereichen und/oder Lastbereichen möglich, den jeweiligen Wandler 9 mit Hilfe der Steuereinrichtung 10 zum Erzeugen von Antischall zu verwenden, um auf diese Weise Störgeräusche, die sich in der Frischluftanlage 4 bzw. in der Abgasanlage 5 ausbreiten, zu bedämpfen. Dabei kann die Erzeugung von Antischall kumulativ zur Erzeugung der zuvor beschriebenen Druckwellen zur Verbesserung des Ladungswechsels realisiert werden. Hierzu werden die Antischallwellen und die Druckwellen, die mit Hilfe des jeweiligen Wandlers 9 erzeugt werden, einfach überlagert. Ebenso ist es möglich, in bestimmten Drehzahlbereichen den jeweiligen elektroakustischen Wandler 9 alternativ zu betreiben, also in bestimmten Drehzahlbereichen ausschließlich zum Erzeugen von Druckwellen, welche die Ladungswechselvorgänge verbessern, und in anderen Drehzahlbereichen ausschließlich zum Erzeugen von Antischall, um Störgeräusche zu bedämpfen.

## Patentansprüche

1. Verfahren zum Betreiben eines Kolbenmotors (1), insbesondere eines Kraftfahrzeugs, mit einer Frischluftanlage (4) zum Zuführen von Frischluft zu Zylindern (3) des Kolbenmotors (1) und mit einer Abgasanlage (5) zum Abführen von Abgas von den Zylindern (3),
- bei dem während eines Ladungswechsels mittels einer abgasseitigen Unterdruckwelle die Entladung des jeweiligen Zylinders (3) von Abgas und/oder mittels einer frischluftseitigen Überdruckwelle die Beladung des jeweiligen Zylinders (3) mit Frischluft unterstützt wird, **dadurch gekennzeichnet, dass**
- bei dem Verfahren die jeweilige Druckwelle mit einem einzigen elektroakustischen Wandler (9) erzeugt wird,
- wobei der elektroakustische Wandler (9) sowohl an die Frischluftanlage (4) als auch an die Abgasanlage (5) angeschlossen ist,
- dass der elektroakustische Wandler (9) außerdem zum Erzeugen der Druckwellen zumindest in bestimmten Drehzahlbereichen und/oder Lastbereichen zum Erzeugen von Antischall verwendet wird, um Störgeräusche, die sich in der Frischluftanlage (4) und in der Abgasanlage (5) ausbreiten, zu bedämpfen,
- dass die Amplituden der Druckwellen mittels einer Regelung eingestellt werden, die als Regelgrößen Messsignale eines Mikrofons (13) berücksichtigt.

2. Verfahren nach Anspruch 1,
**dadurch gekennzeichnet,**
**dass** Zeitpunkte zum Erzeugen der Druckwellen in Abhängigkeit einer Drehzahl des Kolbenmotors (1) ermittelt werden.

3. Verfahren nach Anspruch 1 oder 2,
**dadurch gekennzeichnet,**
**dass** Zeitpunkte zum Erzeugen der Druckwellen in Abhängigkeit einer Drehzahl des Kolbenmotors (1) und in Abhängigkeit einer Temperatur der Frischluft und/oder des Abgases ermittelt werden.

4. Verfahren nach Anspruch 3,
**dadurch gekennzeichnet,**
**dass** die Zeitpunkte in Verbindung mit einem Kennfeld ermittelt werden, in dem die Zeitpunkte zum Erzeugen der Druckwellen abhängig von der Drehzahl in Kennlinien abgelegt sind, die verschiedenen Temperaturen oder Temperaturbereichen zugeordnet sind.

5. Verfahren nach einem der Ansprüche 1 bis 4,
**dadurch gekennzeichnet,**
**dass** die Amplituden der Druckwellen in Abhängigkeit der aktuellen Motorleistung ermittelt werden.

6. Verfahren nach Anspruch 5,
**dadurch gekennzeichnet,**
**dass** ein mit der aktuellen Motorleistung korreliertes Signal berücksichtigt wird, das von einem Motorsteuergerät (8) bereitgestellt wird.

7. Verfahren nach einem der Ansprüche 1 bis 6
**dadurch gekennzeichnet,**
**dass** die Regelung als Regelgrößen Signale eines Motorsteuergerätes (8) berücksichtigt.

8. Kolbenmotor, insbesondere eines Kraftfahrzeuges,
- mit einer Frischluftanlage (4) zum Zuführen von Frischluft zu Zylindern (3) des Kolbenmotors (1),
- mit einer Abgasanlage (5) zum Abführen von Abgas von den Zylindern (3),
- mit einem einzigen elektroakustischen Wandler (9), der an die Frischluftanlage (4) und an die Abgasanlage (5) angeschlossen ist,
- mit einer Steuereinrichtung (10) zum Betreiben des elektroakustischen Wandlers (9), die den Kolbenmotor (1) gemäß dem Verfahren nach einem der Ansprüche 1 bis 7 betreibt,
- wobei zumindest ein Mikrofon (13) mit der Steuereinrichtung (10) verbunden ist, um eine Regelung zum Erzeugen der Druckwellen zu ermöglichen.

## Claims

1. A method for operating a piston engine (1), more preferably of a motor vehicle, with a fresh air system (4) for feeding fresh air to cylinders (3) of the piston engine (1) and with an exhaust system (5) for discharging exhaust gas from the cylinders (3),
- wherein during a gas exchange by means of a negative pressure wave on the exhaust gas side the discharging of exhaust gas from the respective cylinder (3) and/or by means of a positive pressure wave on the fresh air side the charging of the respective cylinder (3) with fresh air is supported, **characterized in**
- **that** in the method the respective pressure wave is generated by means of a single electroacoustic converter (9), wherein the electroacoustic converter (9) is connected to the fresh air system (4) and to the exhaust system (5),
- **that** the electroacoustic converter (9) is used additionally for generating the pressure waves at least in certain rotational speed ranges and/or load ranges for generating anti-sound in order to dampen interference noises which spread in the fresh air system (4) and in the exhaust system (5),
- **that** the amplitudes of the pressure waves are set by means of a regulation, which as regulating quantities takes into account measurement signals of a microphone (13).

2. The method according to Claim 1,
**characterized in**
**that** timing for generating the pressure waves is determined as a function of a rotational speed of the piston engine (1).

3. The method according to Claim 1 or 2,
**characterized in**
**that** timing for generating the pressure waves is determined as a function of a rotational speed of the piston engine (1) and as a function of a temperature of the fresh air and/or of the exhaust gas.

4. The method according to Claim 3,
**characterized in**
**that** the timing is determined in conjunction with a family of characteristics, in which the timing for generating the pressure waves is stored in characteristic curves as a function of the rotational speed, which characteristic curves are assigned to different temperatures or temperature ranges.

5. The method according to any one of the Claims 1 to 4,
**characterized in**
**that** the amplitudes of the pressure waves are determined as a function of the current engine output.

6. The method according to Claim 5,
**characterized in**
**that** a signal correlated to the current engine output is taken into account, which is provided by an engine control unit (8).

7. The method according to any one of the Claims 1 to 6,
**characterized in**
**that** the regulation takes into account as regulating quantities signals of an engine control unit (8).

8. A piston engine, more preferably of a motor vehicle,
- with a fresh air system (4) for feeding fresh air to cylinders (3) of the piston engine (1),
- with an exhaust system (5) for discharging exhaust gas from the cylinders (3),
- with a single electroacoustic converter (9) which is connected to the fresh air system (4) and to the exhaust system (5),
- with a control device (10) for operating the electroacoustic converter (9) according to the method of any one of claims 1 to 7,
- wherein at least one microphone (13) is connected to the control device (10) in order to make possible a regulation for generating the pressure waves.

## Revendications

1. Procédé permettant de faire fonctionner un moteur à pistons (1), en particulier d'un véhicule automobile, avec un système pour air extérieur (4) permettant de fournir de l'air extérieur aux cylindres (3) du moteur à pistons (1) et avec un système pour gaz d'échappement (5) permettant d'évacuer les gaz d'échappement des cylindres (3),
- où, pendant un cycle de chargement, le vidage des gaz d'échappement du cylindre (3) respectif est favorisé au moyen d'une onde de pression négative côté gaz d'échappement et/ou le remplissage du cylindre (3) respectif avec de l'air extérieur est favorisé au moyen d'une onde de surpression côté air extérieur, **caractérisé en ce que**
- dans ledit procédé, l'onde de pression respective est générée par un convertisseur électroacoustique (9) unique,
- dans lequel le convertisseur électroacoustique (9) est raccordé à la fois au système pour air extérieur (4) et au système pour gaz d'échappement (5),
- **en ce que** le convertisseur électroacoustique (9) est en outre utilisé pour générer les ondes de pression au moins dans des plages de régime et/ou de charge déterminées afin de générer un contre-bruit destiné à atténuer les bruits parasites qui se propagent dans le système pour air extérieur (4) et dans le système pour gaz d'échappement (5),
- **en ce que** les amplitudes des ondes de pression sont ajustées au moyen d'une régulation qui prend en compte les signaux de mesure d'un microphone (13) comme variables de régulation.

2. Procédé selon la revendication 1,
**caractérisé en ce que**,
des instants de génération des ondes de pression sont déterminés en fonction d'un régime du moteur à pistons (1).

3. Procédé selon la revendication 1 ou 2,
**caractérisé en ce que**,
les instants de génération des ondes de pression sont déterminés en fonction d'un régime du moteur à piston (1) et en fonction d'une température de l'air extérieur et/ou des gaz d'échappement.

4. Procédé selon la revendication 3,
**caractérisé en ce que**,
les instants sont déterminés en relation avec un diagramme au sein duquel les instants de génération des ondes de pression sont consignés en fonction du régime sous forme de courbes caractéristiques associées à différentes températures ou plages de température.

5. Procédé selon l'une quelconque des revendications 1 à 4,
**caractérisé en ce que**,
les amplitudes des ondes de pression sont déterminées en fonction de la puissance actuelle de moteur.

6. Procédé selon la revendication 5,
**caractérisé en ce que**,
un signal corrélé à la puissance actuelle de moteur et fourni par un appareil de commande de moteur (8) est pris en considération.

7. Procédé selon l'une quelconque des revendications 1 à 6
**caractérisé en ce que**,
la régulation utilise des signaux provenant d'un appareil de commande de moteur (8) comme variables de régulation.

8. Moteur à pistons, en particulier d'un véhicule automobile,
- avec un système pour air extérieur (4) permettant de fournir de l'air extérieur aux cylindres (3) du moteur à pistons (1),
- avec un système pour gaz d'échappement (5) permettant d'évacuer les gaz d'échappement des cylindres (3),
- avec un convertisseur électroacoustique (9) unique raccordé au système pour air extérieur (4) et au système pour gaz d'échappement (5),
- avec un dispositif de commande (10) permettant de faire fonctionner le convertisseur électroacoustique (9) et faisant fonctionner le moteur à pistons (1) conformément au procédé selon l'une quelconque des revendications 1 à 7,
- dans lequel au moins un microphone (13) est relié au dispositif de commande (10) afin de permettre une régulation permettant de générer les ondes de pression.
